# EUROPEAN PATENT APPLICATION

(11) **EP 0 965 865 A1**
(43) Date of publication of application: **22.12.1999**
(21) Application number: 99201492.8
(22) Date of filing: 12.05.1999
(51) Int. Cl.: G02B 5/20, H01L 31/0216

(54) **Nanoparticles in color filter arrays**

(30) Priority: 20.05.1998 US 82236
(71) Applicant: EASTMAN KODAK COMPANY, Rochester, New York 14650 (US)
(72) Inventor: Bishop, John F., Rochester, New York 14650-2201 (US); Wake, Ronald W., Rochester, New York 14650-2201 (US)
(74) Representative: Lewandowsky, Klaus, Dipl.-Ing.

(57) **Abstract**

A product and a process for making a Color Filter Array (CFA) having nanoparticles to form the color pigments. The process involves planarizing a pixellated substrate, dispensing a liquid containing solid particle colorants on the order of an average weight size of less than 50 nanometers onto the substrate surface and forming the liquid into a thin layer on the order of 5 microns or less. The thin layer is then masked, exposed, and developed to form a predetermined pattern. The process is then repeated for each different color within the CFA.

## Description

### FIELD OF THE INVENTION

The invention relates to color filters, and more specifically, to making color filters from materials employing nanoparticle technology.

### BACKGROUND OF THE INVENTION

There are numerous disclosures within the prior art detailing color filter array (CFA) manufacture and synthesis for devices having pixellated substrates. The most common prior art techniques for forming a CFA employ either dye-based colorants or sub-micron pigmented particulate.

A dye is a colorant that is molecularly dispersed or solvated by a carrier or coating solvent. The carrier can be a liquid or a solid at room temperature. A desirable liquid carrier is water. Molecules of the carrier surround each individual dye molecule. In a color filter array prepared with dyes, no colorant is observable under the microscope.

Sub-micron pigmented CFAs are an attractive alternative to dye-based CFAs due to the enhanced light fastness pigmented systems can provide. In pigment-based CFAs, the colorant is coated with a stabilizer such as a photopolymer and/or dispersant and exists as discrete particles in the CFA. These pigment particles are stabilized with dispersants that serve to keep the particles from agglomerating and settling out in the coating solution or carrier.

A CFA created using one of these prior art methodologies has shortcomings in providing limited performance in one or more of the following categories: 1) Light Stability; 2) Heat Stability; 3) Spectral Selectivity; and 4) Elemental Purity.

There also exist prior art processes employing very small color particles (nanoparticles) for forming inks in ink jet applications and for solid particle filter dyes for use conventional photographic films. However, these prior art teachings are silent on employing nanoparticle based technology for color filter arrays on a pixellated substrate. Chief among these prior art disclosures are U.S. Patent No.: 5,679,138 entitled Ink Jet Inks Containing Nanoparticles of Organic Micropigments and U.S. Patent 5,500,331 Comminution With Small Particle Milling Media.

A common deficiency of most prior art milling processes for preparing pigmented systems for CFAs is that they fail to reduce the pigment particle size below the primary particle size of the pigment as supplied by the manufacturer. Pigment particles are supplied as agglomerated powders or wet filter cakes. The process for preparing dispersed pigmented formulations of CFA coating solutions involves two steps: (a) a dispersed or milling step to break up the pigment to the primary particle size and (b) dilution step in which addenda, that may include a photopolymer, is added to the pigmented concentrate to form a coating solution. In the milling step, the pigment is usually suspended in a liquid with a stabilizer along with rigid, inert milling media. In conventional prior art processes, the milling media is generally limited to diameters larger than about 300 microns. Mechanical energy is supplied to this pigment dispersion, and the collisions between the milling media and the pigment cause the pigment to deaggregate into its primary size. A dispersant or stabilizer or both are commonly added to the pigment dispersion to facilitate the deaggregation of the raw pigment powder, and to maintain colloidal particle stability and to retard particle reaggregation and settling.

The median particle diameter of a pigment dispersion after milling as described above, is usually greater than about 100 nanometers. Furthermore, the particle size distribution is often relatively broad, and the particle shapes can range from roughly spherical to highly rod- or needle-like particles. This condition often leads to broad spectral selectivity and/or difficulty developing clean patterns. Although repeated filtration, or centrifugation or other means may minimize this drawback, this adds to the cost and time to manufacture the CFA. Even in those cases where larger aspherical particles are removed or avoided, CFAs prepared with such post-processed pigment dispersions suffer from diminished transparency due to light scattering by particles greater than about 100 nm. This in turn results in a smaller color gamut of the color images processed with image sensors or display devices using such CFAs.

Pigments have been used in place of dyes in the formation of CFAs by coating a pigment dispersion on the substrate. This is followed by masking, exposing, and developing. Typically, the pattern formed is a negative of the mask used, the exposed areas are hardened by exposure and remain after development whereas the unexposed areas remain soluble in the liquid developer. Dispersed pigments within this prior art CFAs are typically have a median nanometers and have a broad distribution of particle sizes. Problems exist in using particles of this size because the non-homogeneous nature of these dispersions increases the difficulty in removing the unexposed areas in negative working systems. Additionally, the spectral selectivity in systems employing particles of this size is limited as compared to systems made with pigment particles of 10-50 nanometers. The pigmented dispersion materials employed in prior art CFAs can also have a limited shelf life compared to dispersion materials made with particles less than 50 nanometers in size.

The prior art also includes the adsorption of dyes onto monodisperse inorganic colloids (Matijevic, et al., U.S. Pat. No. 5,344,489). These colloids are uniformly spherical and when on the order of 100 nanometers or larger give less scattering and higher contrast than dispersions made with pigments of comparable size. When the colloid size is reduced to below 50 nanometers the higher contrast is still seen however the color density and gamut is reduced. Also, this prior art has not identified a set of dyes capable of the heat and light stability obtainable with pigments.

It should be apparent from the foregoing discussion that there remains a need within the art for a system that incorporates nanoparticle pigment technology into color filter arrays.

### SUMMARY OF THE INVENTION

The present invention addresses the previously discussed shortcomings within the prior art by providing a system for preparing a color filter array that employs nanoparticle color pigments.

The present invention covers the use of fine particles prepared using comminution (size reduction) technology. One of the general acknowledged methods for preparing dispersed systems of particulate colorants involves the use of grinding beads.

The formation and incorporation of nanoparticle pigmented colorants in color filter arrays significantly improves the heat stability and light stability of these devices, compared to dye-based CFAs. This invention can significantly reduce the cost of manufacturing CFAs. This invention also produces pure dispersed pigmented slurries that are substantially free of troublesome metallic contaminants commonly present in pigmented systems using conventional comminution technologies. Additionally, a CFA created via a nanoparticle pigmented process can have significantly improved spectral selectivity compared to conventionally processed pigmented CFAs. This improved spectral selectivity results in brighter colors for display devices and truer color reproduction of a wider range of colors for image capture devices.

These aspects are achieved by a color filter array process comprising the steps of: providing a pixellated substrate; placing a planarization layer on the pixellated substrate; dispensing a liquid containing solid particle colorants with a median diameter, by weight, of less than about 50 nanometers onto the substrate surface; and forming the liquid into a thin layer of thickness on the order of 5 microns or less.

These and other aspects, objects, features and advantages of the present invention will be more clearly understood and appreciated from a review of the following detailed description of the preferred embodiments and appended claims, and by reference to the accompanying drawings.

### ADVANTAGES

1. Substantially improved heat stability of a pigmented CFA allows faster packaging during device fabrication;
2. Substantially improved light stability compared to dye-based colorants can significantly extend the life of a CFA that employs the teachings of the present invention;
3. Nanoparticle pigmented CFAs have significantly sharper spectral absorption bands than commonly produced with conventional sub-micron pigmented CFAs. This invention can significantly improve the color rendition of image sensors using this invention compared to conventionally processed pigmented CFAs;
4. The improved heat stability of CFAs using this invention can extend the keeping of these devices and broaden the useful temperature range-of-operation;
5. The elemental purity of pigmented colorants prepared with this invention extends the keeping properties of devices compared to conventionally prepared pigmented CFAs.

### BRIEF DESCRIPTION OF THE DRAWINGS

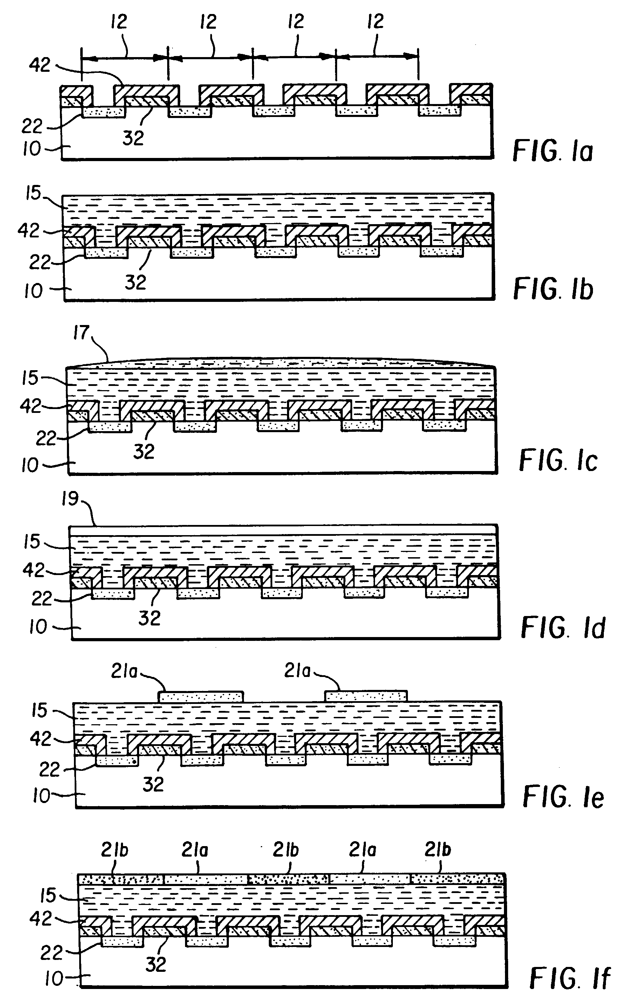

Fig. 1a is an illustration of a pixellated substrate;
Fig. 1b is an illustration of a planarization layer placed on the pixellated substrate of Fig. 1a;
Fig. 1c is an illustration of a photopolymer coating solution with a nanoparticle color pigment dispersion placed upon the planarization layer of Fig. 1b;
Fig. 1d is an illustration of a photopolymer coating solution with a nanoparticle color pigment dispersion formed into a uniformly thin layer on top of the planarization layer on Fig. 1b.
Fig. 1e is an illustration of the masked, exposed and developed layer illustrated in Fig. 1d with a desired CFA pattern formed;
Fig. 1f is an illustration of a second CFA pattern being formed on the illustration as shown in Fig. 1e.

### DETAILED DESCRIPTION OF THE INVENTION

Referring to Fig. 1a, a pixellated substrate 10 has pixels 12 formed thereon is used to demonstrate the formation and incorporation of nanoparticle pigmented colorants in color filter arrays as envisioned by the present invention. Each of the pixels typically includes at least a photodetector 22, an electrode 32 and a light shield 42 over the electrode 32.

In Fig. 1b, a planarization step is employed to smooth the surface of the pixellated substrate 10 by forming a planarizing layer 15. A dispersion 17 is then puddled upon the planarization layer 15 as shown in Fig. 1c. The dispersion 17 is a liquid containing dispersed solid particle colorants with a median diameter on the order of less than 50 nanometers.

In the present invention the pigment dispersions with a mass-weighted median particle diameter of less than 100 nanometers, preferably less than 50 nanometers, are prepared. Using polymeric milling media with a median diameter of less than 100 microns, preferably 50 microns, 99% of the colorant particles, by weight, are milled to a particle diameter of less than 200 nanometers, and preferably less than 100 nanometers. Indeed similar particle size reduction has been achieved with milling media having a median particle size as fine as 5 microns.

There are many different types of materials that may be used as milling media, such as glasses, ceramics, metals and plastics. In the preferred embodiment, the grinding media can comprise particles, preferably substantially spherical of a polymeric resin.

In general, polymeric resins suitable for use herein are chemically and physically inert, substantially free of metals, solvent and monomers and of sufficient hardness to enable them to avoid being chipped or crushed during milling. Suitable polymeric resins include crosslinked polystyrenes such as polystyrene crosslinked with divinylbenzene, styrene copolymers, polyacrylates such as poly(methyl methacrylate), polycarbonates, polyacetals, such as Delrin, vinyl chloride polymers and copolymers, polyurethanes, polyamides, poly(tetrafluoroethylenes), e.g. Teflon and other fluoropolymers, high density polyethylenes, polypropylenes, cellulose ethers and esters such as cellulose acetate, poly(hydroxyethyl methacrylate), poly(hydroxy ethyl acrylate), silicone containing polymers such as polysiloxanes and the like. The polymer can be biodegradable. Exemplary biodegradable polymers can include poly(lactides), poly(glycolids), copolymers of lactides and glycolide, polyanhydrides, poly(iminocarbonates). The polymeric resin can have a density from 0.9-3.0 gram per cc. Higher density resins are preferred inasmuch as it is believed these provide more efficient particle size reduction. The most preferred polymeric media are crosslinked or uncrosslinked resins based on styrene.

Milling takes place in a high-speed mill. By high-speed mill we mean milling devices capable of accelerating milling media to velocities greater than about 5 meters per second. The mill can contain a rotating shaft with one or more impellers. In such a mill the velocity imparted to the media is approximately equal to the peripheral velocity of the impeller. Sufficient milling media velocity is achieved, for example, in Cowles-type saw tooth impeller having a diameter of 40 mm when operated at 9000 revolutions per minute. The preferred proportions of the milling media, the pigment, the liquid dispersion medium and dispersant can vary within wide limits and depends, for example, upon the particular material selected and the size and density of the milling media, etc. The process can be carried out in a continuous, batch or semi-batch mode.

In the present invention, any of the known organic pigments can be used. Pigments can be selected from those disclosed, for example, the in the U.S. Patent numbers 5,026,427, 5,085,698, 5,141,556, 5,160,370, 5,169,436. The exact choice of pigment will depend upon the specific color reproduction and image properties required for the pigmented CFA. An exemplary 3 color set (RGB) may be pigment blue 15:6, pigment green 36, and pigment red 177.

The dispersant is another important ingredient in the preparation of a useful pigmented CFA. Dispersants for aqueous CFA formulations can include many nonionic, anionic, and cationic pigment dispersants. Preferred dispersants for this invention include cationic photopolymers having crosslinking repeating units containing two quaternary ammonium moieties and an ethylenic photocrosslinking moiety as described in U.S. Patent 4,876,167 by Snow, et al. It should be noted that dispersants for solvent based systems depend heavily upon the particular solvents used and can include a variety of oligomeric and/or polymeric dispersants.

The following examples illustrates the utility of the present invention:

### EXAMPLE #1

A formulation for coating a pigmented CFA was prepared using a pigmented slurry of a nanoparticle dispersion of a yellow pigmented colorant. The pigmented slurry was prepared using comminution technology. The pigmented slurry was prepared by blending the following ingredients in a 2 liter water-cooled cylindrical vessel:
- 140 grams: photopolymer* solution (16.1% by weight)
- 75.8 grams: pigment yellow #139 (manufactured by BASF and known as Paliotol Yellow K1841)
- 285.5 grams: Deionized water
- 600.1 grams: polymer beads ** (median diameter size = 50 microns)

* photopolymer = polymer of chloromethyl styrene known as 3-(7-methoxy-3-coumarinol)-1-methylpyridinium p-toluene sulfonate
** polymer beads = weight average particle size = 50 micron and comprised of a copolymer of styrene (30 weight %) and divinylbenzene (70 weight %)

This mixture was stirred in the 2 liter water cooled vessel (inside diameter = 120 mm) using a propeller mixing blade at low speed (less than 500 RPM) until all ingredients were uniformly incorporated in the liquid medium. The resulting mixture was then agitated for 12 hours using a Cowles-type saw tooth impeller blade (diameter = 60 mm) positioned concentrically in the vessel at a rotational speed of 5740 RPM. At the end of the milling cycle 254.2 grams of deionized water and 1.3 grams of biocide (1.5% solution of Kathon LX manufactured by Rohm and Haas, Inc.) were added to the slurry using slow speed mixing until the slurry composition was homogenous. The liquid slurry was separated from the polymeric grinding media using a batch filtration device where the beads are collected on filter media (nominal filter pore size is approximately 10 microns) and the liquid slurry is collected.

The particle size of the slurry was measured using a Microtrac Ultra Fine Particle Size Analyzer (made by Leeds and Northrup of Horsham, PA-USA). A dilute slurry was introduced in the measurement chamber of the analyzer and particle size and size distribution (mass weighted distribution) were determined:

| Particle Diameter (nanometers) | | | |
|---|---|---|---|
| PIGMENT | 10% less than | 50% less than | 99% less than |
| Pigment Yellow #139 | 8.9 | 10.4 | 72.3 |

### EXAMPLE #2

A formulation for coating a pigmented CFA was prepared using a pigmented slurry of pigment red #122.

The pigmented slurry was prepared using comminution technology and the slurry mixture was prepared in a 2 liter vessel using:
- 62.4 grams: Dispersant (SynFac 8216, manufactured by Millikan Chemical - USA)
- 103.6 grams: Pigment Red #122 ( Sunfast Quinacridone manufactured by Sun Chemical USA)
- 351.8 grams: Deionized water
- 619.6 grams: polymer beads **

** polymer beads = weight average particle size = 50 micron and comprised of a copolymer of styrene (30 weight %) and divinylbenzene (70 weight %)

This mixture was stirred in a 2 liter water cylindrical vessel (inside diameter = 120 mm) using a propeller mixing blade (rotational speed less than 500 RPM) until all ingredients were uniformly incorporated in the liquid medium. The resulting mixture was then agitated for 8 hours using a Cowles-type saw tooth impeller blade (diameter = 60 mm) positioned concentrically at a rotational speed of 6000 RPM. At the end of the milling cycle 515 grams of deionized water and 1.7 grams of biocide (1.5% solution of Kathon LX manufactured by Rohm and Haas Inc.-USA) were added to the slurry using slow speed mixing until the slurry composition was homogenous. The liquid slurry was separated from the polymeric grinding media using a batch filtration device where the beads are retained on the filter media (nominal filter pore size is approximately 10 microns) and the liquid slurry is collected.

The particle size of the slurry was measured using a Microtrac Ultra Fine Particle Size Analyzer (made by Leeds and Northrup of Horsham, PA-USA). A dilute slurry was introduced in the measurement chamber of the analyzer and the particle size of the dispersed pigment phase was determined to be:

| Particle Diameter (nanometers) | | | |
|---|---|---|---|
| PIGMENT | 10% less than | 50% less than | 99% less than |
| Pigment Red#122 | 9.9 | 12.2 | 110.0 |

The foregoing examples have illustrated preferred embodiment as envisioned by the inventor. It should be noted these examples employed aqueous liquid media, however, this invention can also be practiced using organic solvents or solvent/water mixtures as the liquid medium.

The preferred embodiment employs dispersion of particle colorants with a median, mass-weighted size distribution of about 5-15 nanometers, however numerous embodiments of the present invention can equally employ particles with a median size distribution of no larger than 50 nanometers. Additionally, it is envisioned that pigment dispersions having a median particle diameter of less than 100 nanometers will have numerous benefits. The planarization layer 15 having dispersion 17 dispensed on it is then spun at a high speed (between 1000 and 4000 rpm) until the dispersion 17 forms a thin layer 19 upon the planarization layer 15, as shown in Fig. 1d. This thin layer 19 is only on the order of 1 to 2 microns thick, within the preferred embodiment. Different dispensing techniques will be obvious to those skilled in the art. Among these are static dispense which means the substrate remains stationary during the dispensing of the appropriate amount of liquid. There is also dynamic dispensing wherein the substrate is slowly spun while the liquid is being dispensed as a spreading technique for improved uniformity. In addition, the nozzle used to dispense the liquid can be either stationary or moving during the dispensing operation. The combination of dispense nozzle and substrate motion is optimized for the particular substrate and materials being coated. Although spin coating is the preferred method for creating thin coatings of uniform thickness, other liquid coating methods such as gravure coating, slot orifice coating techniques, spray coating, curtain coating among other conventional coating methods can be used. It should be understood that numerous embodiments will be apparent to those skilled in the art and that forming the liquid dispersion 17 into a thin layer 19 on the order of 5 microns or less will provide numerous embodiments of the present invention. However, the preferred embodiment uses a thin layer 19 that is on the order of 1 to 2 microns thick. The pigment within dispersion 17 is a nano-particle pigment dispersed in a polymeric binder with an appropriate solvent. Polymeric binders useful in the present invention can be either solvent or aqueous soluble and are not restricted to any particular chemical structure class. Examples of such chemical structure classes include polyolefins, polyesters, polyethers, and polyepoxides that can have substituents for enhancing the necessary properties such as solubility, film formation, dispersion stability, and image formation. The nanoparticle pigment can be crystalline, amorphous, organic or inorganic.

Referring to Fig. 1e, the thin layer 19 is masked, exposed, and developed to form the desired CFA pattern 21a. The masking and exposing can be accomplished with any of a variety of microlithographic techniques. The mask is usually a glass plate containing the desired pattern in some material opaque to visible and ultraviolet electromagnetic radiation, e.g.- chrome. Projecting electromagnetic radiation through the mask results in exposure of the thin layer 19 in the desired pattern. The wavelength of the radiation is chosen to correspond to the regions of the spectrum where the layer is photosensitive thus causing a chemical reaction in the exposed regions. This is typically accomplished by using a lamp emitting a broad spectrum of radiation so as to be useful with a wide variety of materials, however exposure sources of a narrow bandwidth or single wavelength are also available for which the appropriate materials must be used. The development is usually accomplished by treating the exposed layer with a liquid that preferentially dissolves either the exposed or unexposed regions. Removal of the exposed areas will result in a pattern that is positive when compared with the mask. Conversely, removing the unexposed regions results in a negative pattern. The method of treatment can be one of several commonly used by those skilled in the art that include immersion of the substrate in a bath of the liquid for the required amount of time, spraying the liquid on the substrate, forming a puddle of the liquid on the substrate, or a combination thereof. Development using a liquid is usually preferred due to its low cost in materials and time. However, when justified, development can also be accomplished using a plasma.

The process shown in Figures 1a through 1e is repeated to create as many different CFA patterns as desired for individual colors. Figure 1f shows a complete CFA comprising two colors, 21a and 21b.

A color filter array (CFA) created by the foregoing process significantly improves the heat stability and light stability of the CFA compared to dye-based CFAs. This invention can significantly reduce the cost of manufacturing CFAs. This invention also produces pure dispersed pigmented slurries that are substantially free of troublesome metallic contaminants commonly present in pigmented systems using conventional comminution technologies. Additionally, a CFA created via a nanoparticle pigmented process can have significantly improved spectral selectivity compared to conventionally processed pigmented CFAs which results in display devices with brighter colors and image capture devices with improved color reproduction.

A CFA formed by the process of the prior art using sub-micron pigmented dispersions can have poor clean-out of high-resolution patterns and, accordingly, can require more sophisticated equipment than required for dye-based CFAs. The required equipment could include a pump to increase the pressure of the spray during development or subsequent rinse or a separate line to mix a gas with the developer or rinse to produce a fine mist with particle sizes small enough to effectively clean out the small features. The present invention facilitates this cleanout of high-resolution patterns due to the smaller particle size.

Other aspects of the invention include:

The method further comprising the steps of repeating the placing, dispensing, forming, masking, exposing, and developing for at least one different color to form a different pattern from previous pattern; the method wherein the pixellated substrate is a semiconductor; the method wherein the pixellated substrate is a transmissive display device; the method wherein the liquid contains nanoparticle pigments in crystalline form; the method wherein the liquid contains nanoparticle pigments in amorphous form; the method wherein the liquid contains nanoparticle pigments in organic form; the method wherein the liquid contains nanoparticle pigments in inorganic form; the method wherein the liquid is an aqueous solution; the method wherein the liquid is an organic solvent or water-solvent mixture; the color filter wherein the nanoparticle pigment crystalline; the color filter wherein the nanoparticle pigment is amorphous; the color filter wherein the nanoparticle pigment is organic; the color filter wherein the nanoparticle pigment is inorganic; the color filter wherein the pixellated substrate is a semiconductor; and the color filter wherein the pixellated substrate is a transmissive display device.

The foregoing discussion illustrates the preferred embodiment for practicing the invention, obvious modifications will be apparent to those skilled in the art, accordingly, the scope of the invention should be measured by the appended claims.

The invention has been described with reference to a preferred embodiment. However, it will be appreciated that variations and modifications can be effected by a person of ordinary skill in the art without departing from the scope of the invention.

### PARTS LIST

- 10: pixellated substrate
- 12: pixels
- 14: planarization layer
- 17: dispersion
- 21a: CFA pattern
- 21b: CFA pattern
- 22: photodetector
- 32: electrode
- 42: light shield

## Claims

1. A method of making color filters comprising the steps of:
providing a pixellated substrate;
placing a planarization layer on the pixellated substrate;
dispensing a liquid containing solid particle colorants of a mass-weighted median diameter of 50 nanometers or less, onto the planarization layer; and
forming the liquid into a thin layer on the order of 5 microns or less.

2. The method of claim 1 further comprising the steps of
masking the thin layer; exposing the thin layer to electromagnetic radiation, and
developing the thin layer to form a predetermined pattern.

3. The method of claim 2 further comprising the step of clearing out employing pressure but without requiring high pressure equipment required by sub-micron solid particle colorants

4. The method of claim 1 wherein the solid particle colorants have an average weight size of 5 to 15 nanometers.

5. The method of claim 1 wherein 99% of the colorant particles by weight are on the order of less than 200 nanometers.

6. The method of claim 1 wherein 99% of the colorant particles by weight are on the order of less than 100 nanometers.

7. A color filter comprising:
a pixellated substrate;
a planarization on top of the pixellated substrate
a color filter formed on top of the planarization layer; and
the color filter comprising a nanoparticle pigment dispersed in a polymeric binder.

8. The color filter of claim 7 wherein the solid particle colorants have an average weight size of 5 to 15 nanometers.

9. The color filter of claim 7 wherein 99% of the colorant particles by weight are on the order of less than 200 nanometers.

10. The color filter of claim 7 wherein 99% of the colorant particles by weight are on the order of less than 100 nanometers.
